# EUROPÄISCHE PATENTSCHRIFT

(11) **EP 2 929 977 B1**
(45) Veröffentlichungstag und Bekanntmachung des Hinweises auf die Patenterteilung: **14.08.2019**
(21) Anmeldenummer: 15162772.6
(22) Anmeldetag: 08.04.2015
(51) Int. Cl.: B23K 26/14, B23K 26/32, B23K 26/21, B23K 103/04, B23K 35/38, B23K 26/12

(54) **VERFAHREN ZUM CO2-LASER-SCHWEISSEN VON NIEDRIG LEGIERTEN STÄHLEN**
METHOD FOR CO2 LASER WELDING OF LOW ALLOY STEELS
PROCÉDÉ DE SOUDAGE LASER CO2 D'ACIERS EN FAIBLE ALLIAGE

(30) Priorität: 08.04.2014 DE 102014005193
(43) Veröffentlichungstag der Anmeldung: 14.10.2015
(73) Patentinhaber: Messer Group GmbH, 65812 Bad Soden (DE)
(72) Erfinder: Rockser, Mario, 17498 Hinrichshagen (DE); Wankum, Achim, 47809 Krefeld (DE); Wolters, Michael, 47058 Duisburg (DE)
(74) Vertreter: Münzel, Joachim R.

(56) Entgegenhaltungen:
- EP-A1- 1 367 143
- EP-A1- 1 493 528
- EP-A1- 1 557 234
- DE-A1- 10 110 702
- JP-A- H08 276 290

## Beschreibung

Die Erfindung betrifft ein Verfahren zum Laserschweißen eines metallischen Werkstücks unter Verwendung eines CO₂-Lasers, bei dem während des Schweißens die Schweißstelle von einem Schutzgas umspült wird.

In der industriellen Anwendung sind zahlreichen Schweißgase für das Schweißen unter Schutz- bzw. Prozessgasen bekannt, wobei je nach der Zusammensetzung des zu schweißenden Werkstücks, der jeweiligen Schweißaufgabe und des jeweils angewandten Schweißverfahrens unterschiedliche Gase oder Gasgemische zum Einsatz kommen.

Beim Laserstrahlschweißen muss das Prozessgas verschiedene Aufgaben erfüllen. Es soll einerseits im Schweißbereich unerwünschte Reaktionen der Umgebungsatmosphäre mit dem Werkstück verhindern, es soll einen positiven Effekt auf die Schmelzmetallurgie ausüben und darf unter der Strahlenbelastung des Lasers kein Plasma bilden. In der Regel wird das Prozessgas durch eine Düse koaxial zum Laserstrahl gerichtet zugeführt, unter Umständen kann jedoch statt dessen oder zusätzlich auch eine transversal zum Laserstrahl gerichtete zweite Düse Verwendung finden.

Ein wesentlicher Parameter zur Auswahl des Schutzgases beim Laserschweißen ist die Wellenlänge des auf das zu schweißende Werkstück fokussierten Laserstrahls. Bei dem zum Schweißen von Werkstücken am weitesten verbreiteten Lasertyp, dem CO₂-Laser, liegt die Wellenlänge im fernen Infrarot bei 10,6 µm. Als Prozessgas kommt bei CO₂-Lasern daher überwiegend Helium oder ein Gasgemisch mit einem hohen Anteil von Helium zum Einsatz, da Helium von der Strahlung des CO₂-Lasers nicht ionisiert wird und somit kein den Schweißprozess störendes Schutzgasplasma ("Plasmafackel") ausbildet.

Stickstoff und Argon sind zwar vergleichsweise preisgünstig zur Verfügung stehende Gase, weisen aber die Nachteile auf, dass der Laserstrahl mit den Argonatomen wechselwirkt und so zur Ausbildung einer Plasmafackel führt und Stickstoff in hohen Konzentrationen als Stahlschädling bekannt ist. Die Neigung des Argons zur Plasmabildung, die beim Lichtbogenschweißen und auch beim Laser-Hybrid-Schweißen durchaus vorteilhaft ist, ist beim reinen Laserschweißen äußerst nachteilig, da sie den Wirkungsgrad des Schweißens verringert und die Laseroptik beschädigen kann. Aufgrund seiner Wellenlänge koppelt der Strahl des CO₂-Lasers besonders gut an das Plasma an, was zu einem starken Energieverlust des Laserstrahls führt, wodurch die Eindringtiefe des Strahls in das Werkstück deutlich vermindert wird. Demgegenüber ist die Wechselwirkung von Festkörperlaserstrahlen mit Argon aufgrund der wesentlich geringeren Wellenlänge weitaus schwächer, weswegen hier die Verwendung von Argon als Prozessgas mit weniger Nachteilen verbunden ist.

Aus diesen Gründen wurden bislang für das CO₂-Laserschweißen zumindest von unlegierten oder niedrig legierten Stählen überwiegend Schutzgase verwendet, die einen erheblichen Anteil an Helium enthalten. Da Helium allerdings sehr teuer ist, wurde schon früh versucht, alternative Schutzgase zu finden, die zu ähnlich guten Schweißergebnissen führen. Beispielsweise wurde vorgeschlagen, durch Beimischungen anderer Gase den Heliumgehalt zu senken, um so die Kosten für das Schutzgas zu reduzieren. So wird in der EP 1 022 087 A1 ein Schutzgas zum Laserstrahlschweißen, insbesondere zum Schweißen mit Kohlendioxidlasern beschrieben, das überwiegend aus Helium besteht, jedoch einen Anteil bis zu 35 Vol.-% Kohlendioxid enthält. Aus der EP 1 084 788 B4 sind Schutzgase zum CO₂-Laserschweißen bekannt, die die Komponenten Helium und Wasserstoff enthalten; als beispielhafte Schutzgaszusammensetzungen werden angegeben: 20 bis 50 Vol.-% Helium und/oder Neon, 50 vpm (0,005 Vol.-%) bis 15,0 Vol.-% Wasserstoff und restlich Argon, oder 20 bis 50 Vol.-% Helium und/oder Neon, 50 vpm (0,005 Vol. -%) bis 15,0 Vol. -% Wasserstoff und restlich Stickstoff. Nachteilig bei all diesen Gemischen ist der immer noch recht hohe Anteil an teurem Helium.

In der EP 1 160 048 A1 werden verschiedene Schutzgasgemische untersucht, die für das Laser-Hybrid-Schweißen von Karbonstählen bestimmt sind. Diese Gemische bestehen aus Helium und/oder Argon mit geringen Beimengungen aus Wasserstoff, Stickstoff und/oder Kohlendioxid. Beispielsweise besteht ein Schutzgas zum Laser-Hybrid-Schweißen von Karbonstahl aus Argon mit einer Beimischung von bis zu 15 Vol.-% Kohlendioxid und/oder Sauerstoff. Die in dieser Druckschrift beschriebenen Schutzgase sind jedoch insbesondere im Hinblick auf ihre für die Ausbildung eines Lichtbogens vorteilhafte plasmaerzeugende Wirkung optimiert und für den Einsatz beim reinen CO₂-Laserschweißen nicht oder nicht ohne weiteres geeignet.

In der DE 196 16 844 B4 wurde bereits vorgeschlagen, die Bildung der Plasmafackel durch Zusatz von bis zu 25 Vol.-% Wasserstoff in einem im Übrigen aus Argon bestehenden Schutzgas zu unterdrücken. Durch den Wasserstoffzusatz wird die Ausbildung der Plasmafackel zwar deutlich reduziert, dennoch ist das Schweißergebnis nicht mit dem Ergebnis vergleichbar, das bei Verwendung von Helium als Prozessgas erzielt wird.

In der DE 196 16 844 B4 wurde vorgeschlagen, die Bildung der Plasmafackel durch Zusatz von bis zu 25 Vol.-% Wasserstoff in einem im Übrigen aus Argon bestehenden Schutzgas zu unterdrücken. Durch den Wasserstoffzusatz wird die Ausbildung der Plasmafackel zwar deutlich reduziert, das Schweißergebnis ist jedoch nicht mit dem Ergebnis vergleichbar, das bei Verwendung von Helium als Prozessgas erzielt wird.

In der EP1493528 wird ein Verfahren zum Laserschweißen von Stahlblechen offenbart, bei dem ein Gasgemisch enthaltend mindestens ein Gas aus Argon, Helium und Stickstoff sowie 20 bis 50 Vol.% Kohlendioxid verwendet wird.

Der Erfindung liegt somit die Aufgabe zugrunde, eine vergleichsweise preisgünstiges Prozessgas für das CO₂-Laserschweißen von unlegierten oder niedrig legierten Stählen zu entwickeln, bei dem die Ausbildung einer Plasmafackel unterdrückt und zugleich ein mit der Verwendung eines heliumhaltigen Gasgemisches vergleichbares Schweißergebnis erzielt wird.

Die Aufgabe der Erfindung wird gelöst durch ein Verfahren zum CO₂-Laserschweißen mit den Merkmalen des Patentanspruchs 1.

Gemäß dem erfindungsgemäßen Verfahren kommt als Prozessgas ein Gasgemisch, bestehend aus 30 Vol.-% bis 35 Vol.% Kohlendioxid, Rest Argon, zum Einsatz. Das Schutzgas ist besonders für das CO₂-Laserschweißen von unlegierten oder niedrig legierten Stählen, insbesondere von Baustählen geeignet.

Entgegen der beispielsweise in der EP 1 160 048 A1 geäußerten Ansicht, ein Schutzgas mit derart hohen Anteilen von Kohlendioxid sei beim CO₂-Laserschweißen aufgrund seiner Absorptionswirkung unvorteilhaft, lassen sich mit dem erfindungsgemäßen Schutzgas Ergebnisse mit einer Qualität erzielen, die mit denen bei Verwendung von Helium als Schutzgas vergleichbar sind.

Der hohe Kohlendioxidgehalt im Schutzgas reduziert die Neigung zur Ausbildung einer Plasmafackel gegenüber der Verwendung von reinem Argon. So hat sich beispielsweise gezeigt, dass beim Schweißen von 3 mm dicken Blechen und einer Laserleistung von 2 kW Kohlendioxidgehalte von 30 Vol.-% bis 35 Vol.-% in Argon das Ausbilden einer Plasmafackel sogar vollständig verhindern. Das erfindungsgemäße Zweistoffgemisch aus Argon und Kohlendioxid führt damit beim CO₂-Laserschweißen zu einer effizienten Unterdrückung der Plasmafackel, vermeidet jedoch andererseits eine übermäßige Oxidation der Schweißnaht und eröffnet damit eine preisgünstige Alternative zum Schweißen von Baustählen.

Der Kohlendioxidgehalt im Schutzgas wird dabei vorteilhafterweise umso größer gewählt, je dicker das zu schweißende Werkstück und je höher die Strahlleistung des Schweißlasers ist. Erfindungsgemäß führt ein Schutzgas von 30 Vol.-% bis 35 Vol.-% Kohlendioxid in Argon bei Blechen von 3 bis 5 mm Dicke und einer Laserleistung von 1,5 bis 3 kW zu besonders vorteilhaften Ergebnissen.

Das Schutzgas besteht aus Argon und Kohlendioxid. Die Beimischung weitere molekulare Gase, wie Stickstoff oder Wasserstoff, in das Schutzgasgemisch oder deren Verwendung anstelle von Kohlendioxid ist beim CO₂-Laserschweißen von unlegierten Baustählen dagegen zu vermeiden, da diese zur Bildung von Wasserstoffrissen und einer Alterungsneigung des Stahls führen kann.

Das Schutzgasgemisch führt zu Schweißnähten vergleichbarer Qualität wie bei der Verwendung von reinem Helium. Eine Reduzierung oder gar der Verzicht auf Helium wird in vielen Einsatzfällen möglich. Hierdurch wird der Einsatz des CO₂-Lasers für den Anwender wirtschaftlicher und er ist in vielen Fällen nicht mehr gezwungen, den CO₂-Laser durch andere Strahlquellen zu ersetzen.

## Patentansprüche

1. Verfahren zum Laserschweißen eines Werkstücks aus unlegiertem oder niedrig legiertem Stahl unter Verwendung eines CO₂-Lasers, bei dem während des Schweißens die Schweißstelle von einem Schutzgas umspült wird,
**dadurch gekennzeichnet,**
**dass** als Schutzgas ein Gasgemisch, bestehend aus zwischen 30 Vol.-% und 35 Vol.-% Kohlendioxid, Rest Argon, eingesetzt wird, als Werkstück ein Blech von 3 bis 5mm Dicke zum Einsatz kommt und die Leistung des Lasers zwischen 1,5 bis 3 kW beträgt.

## Claims

1. Method of laser welding of a workpiece made of unalloyed or low-alloy steel using a CO₂ laser, in which the weld site is purged by a protective gas during the welding,
**characterized in that**
the protective gas used is a gas mixture consisting of between 30% by volume and 35% by volume of carbon dioxide, the remainder being argon, the workpiece used is a sheet of thickness 3 to 5 mm, and the power of the laser is between 1.5 and 3 kW.

## Revendications

1. Procédé pour le soudage au laser d'une pièce en acier non allié ou faiblement allié à l'aide d'un laser au CO₂, dans lequel le site de soudage est entouré d'un gaz de protection pendant le soudage, **caractérisé en ce qu'**on utilise, comme gaz de protection, un mélange gazeux constitué par entre 30% en volume et 35% en volume de dioxyde de carbone, le reste étant de l'argon, on utilise, comme pièce, une tôle de 3 à 5 mm d'épaisseur et la puissance du laser est située entre 1,5 et 3 kW.
